# FASCICULE DE BREVET EUROPEEN

(11) **EP 3 006 188 B1**
(45) Date de publication et mention de la délivrance du brevet: **21.06.2017**
(21) Numéro de dépôt: 15185301.7
(22) Date de dépôt: 15.09.2015
(51) Int. Cl.: B29C 65/06, B29K 105/06, B29L 31/30

(54) **PROCEDE ET DISPOSITIF DE TRAITEMENT D'UNE PIECE CREUSE ASSEMBLEE PAR UN PROCEDE DE SOUDURE PAR VIBRATION LINEAIRE ET MACHINE DE SOUDURE PAR VIBRATION LINEAIRE EQUIPEE D'UN TEL DISPOSITIF**
VERFAHREN UND VORRICHTUNG ZUR BEHANDLUNG EINES HOHLTEILS, DAS MITHILFE EINES LINEAREN VIBRATIONSSCHWEISSVERFAHRENS ZUSAMMENGEFÜGT WIRD, UND MASCHINE ZUM LINEAREN VIBRATIONSSCHWEISSEN, DIE MIT EINER SOLCHEN VORRICHTUNG AUSGESTATTET IST
METHOD AND DEVICE FOR TREATING A HOLLOW PART ASSEMBLED BY A LINEAR VIBRATION WELDING METHOD AND LINEAR VIBRATION WELDING MACHINE PROVIDED WITH SUCH A DEVICE

(30) Priorité: 29.09.2014 FR 1459164
(43) Date de publication de la demande: 13.04.2016
(73) Titulaire: EGH Industries, 68250 Pfaffenheim (FR)
(72) Inventeur: GROSS, Eric, 68000 Colmar (FR)
(74) Mandataire: Koelbel, Caroline

(56) Documents cités:
- WO-A2-2010/128757
- DE-A1-102006 051 691
- JP-A- H05 242 648
- US-A1- 2002 092 994

## Description

### Domaine technique :

La présente invention concerne un procédé de traitement d'une pièce creuse assemblée par un procédé de soudure par vibration linéaire, ladite pièce creuse définissant au moins un volume intérieur, comportant au moins un orifice d'entrée et au moins un orifice de sortie, et étant réalisée dans une matière synthétique renforcée ou non par des charges, procédé de traitement dans lequel, au moins pendant le procédé de soudure au cours duquel des particules se détachent de la matière synthétique composant ladite pièce creuse, accompagnées d'une fraction des charges si la matière synthétique en contient, en raison de l'abrasion induite par la vibration linéaire, l'on met en circulation un flux de gaz dans le volume intérieur de ladite pièce creuse, entre au moins ledit orifice d'entrée et ledit orifice de sortie, pour extraire lesdites particules et ladite fraction des charges du volume intérieur de ladite pièce creuse.

L'invention concerne également un dispositif de traitement mettant en oeuvre ledit procédé de traitement, ce dispositif comportant au moins une première unité de ventilation pour mettre en circulation un flux de gaz dans le volume intérieur de ladite pièce creuse, entre au moins ledit orifice d'entrée et ledit orifice de sortie, pour extraire lesdites particules du volume intérieur de ladite pièce creuse, accompagnées d'une fraction des charges si la matière synthétique en contient, ainsi qu'une machine de soudure par vibration linéaire équipée d'un tel dispositif de traitement.

### Technique antérieure :

La soudure par vibration linéaire de pièces synthétiques creuses est bien connue notamment dans l'industrie automobile et les biens de consommation. Cette technique de soudure présent l'avantage de n'utiliser aucun apport extérieur de chaleur. La chaleur nécessaire à la fusion de la matière synthétique est uniquement apportée par une phase de friction générée entre deux demi-pièces à assembler, lorsqu'elles sont soumises à une vibration linéaire relative. En particulier, la friction crée un échauffement localisé dans une zone de contact, appelée communément « cordon de soudure ». Cet échauffement localisé induit la fusion du cordon de soudure entrainant la soudure des deux demi-pièces lors de leur refroidissement. Plus précisément, les deux demi-pièces sont mises en contact sous une pression déterminée notamment en fonction de leur taille, de la largeur du cordon de soudure, etc., et une des demi-pièces est déplacée linéairement par rapport à l'autre demi-pièce, perpendiculairement à l'effort exercé sur les demi-pièces. L'amplitude du mouvement relatif entre les deux demi-pièces est faible, par exemple entre 0,5 et 2mm en fonction de la fréquence d'oscillation, par exemple entre 100Hz et 250Hz. Le temps de soudage est court d'environ 2 à 10 secondes pour un temps de cycle total d'environ 20 à 45 secondes. Même si la soudure par vibration linéaire nécessite un équipement plus complexe que les autres techniques de soudure, elle a l'avantage de s'adapter à presque toutes les formes de pièces creuses. Tous les thermoplastiques peuvent ainsi être assemblés par cette technique, y compris les thermoplastiques renforcés par des charges, telles que des matières minérales (calcium carbonate, talc, mica, etc.) et d'autres matériaux (fibre de verre, fibre de carbone, etc.).

Cette technique de soudure par vibration linéaire présente toutefois un inconvénient, qui peut être majeur. En effet, dans les premières secondes du procédé de soudure, la friction des pièces à souder provoque une abrasion et un détachement de particules de matière thermoplastique, accompagné d'un détachement d'une fraction des charges, telles que des fibres de verre ou autres, si la matière thermoplastique composant les pièces à souder en contient. Cette pollution est préjudiciable au fonctionnement des dispositifs dans lesquels sont montées les pièces soudées, comme par exemple des moteurs à combustion interne, si les pièces soudées composent au moins en partie le circuit de carburant, le circuit d'air, ou autres, comme un collecteur d'admission d'air, un conduit d'entrée du turbo, etc. En effet, ces particules et/ou ces fibres qui sont libres à l'intérieur des pièces creuses soudées, peuvent se loger dans des zones sensibles, telles que des sièges de soupape, des paliers de turbo, etc. et ainsi dégrader l'étanchéité et/ou la durée de vie de ces zones sensibles.

Pour ces raisons, l'industrie automobile a créé des normes de propreté pour ce type de pièces soudées dans le but de limiter voire d'éliminer les problèmes de fiabilité induits par ces pièces. Ces normes définissent notamment la masse volumique de polluants admissible pour un nombre de pièces données, la taille et/ou la surface des particules et/ou charges admissibles.

Certaines solutions ont été développées pour essayer de répondre à ces contraintes normatives sans qu'aucune ne soit réellement satisfaisante. Une des solutions consiste à aspirer les particules et/ou les charges qui se sont détachées pendant l'opération de soudure, sans apporter un progrès significatif. En effet, les particules et/ou les charges peuvent se charger électro-statiquement lors de la friction des demi-pièces. Dans ce cas, elles se collent contre la paroi intérieure de la pièce creuse, qui est une paroi fonctionnelle, et ne sont donc pas éliminées. Plus simplement, le flux d'air soufflé ou aspiré peut ne pas atteindre certaines zones de la pièce creuse lorsqu'elle est complexe, laissant subsister des particules et/ou charges détachées dans ces zones. C'est le cas notamment dans la publication WO 2010/128757 A2 où le flux d'air est aspiré et filtré entre un orifice d'entrée et un orifice de sortie adjacents ménagés dans un côté de la pièce à souder. Une autre solution consiste à laver les pièces après soudure. L'équipement de lavage nécessaire est très coûteux et son efficacité discutable, d'autant plus que les pièces creuses ont généralement des formes complexes présentant des cavités, telles que par exemples des résonateurs, dans lesquelles l'eau peut rester emprisonnée. Une autre solution consiste à chauffer le cordon de soudure par rayonnement infrarouge avant la soudure par vibration linéaire pour réduire le temps de friction. Toutefois, cette technique est lourde et pas toujours adaptée aux pièces de forme complexe. Encore une autre solution consiste à ioniser le flux d'air comprimé qui circule dans la pièce à souder comme dans la publication DE 10 2006 051691 A1 pour neutraliser les particules et/ou les charges qui se sont détachées de la pièce et faciliter leur extraction. Cette solution n'est toutefois pas suffisante et ne s'applique qu'aux matières thermoplastiques renforcées par des charges, telles que des fibres de verre.

Par ailleurs, il existe d'autres procédés de soudure évitant les inconvénients de la soudure par vibration linéaire, tels que la soudure miroir, la soudure par flux d'air chaud. Néanmoins, ces techniques ne sont pas adaptées à la soudure de pièces dont le cordon de soudure est de forme complexe. En particulier, la soudure miroir impose un cordon de soudure plan, n'est pas adaptée aux matières techniques, telles que le polyamide, et génère un bourrelet de soudure préjudiciable à la fonctionnalité des pièces. D'autres part, la soudure par flux d'air chaud nécessite de mettre en place sur tout le trajet du cordon de soudure une pluralité de micro buses pour fusionner la matière avant d'assembler les demi-pièces. Ainsi, cette technique implique une mise en oeuvre complexe et onéreuse.

### Exposé de l'invention :

La présente invention vise à pallier ces inconvénients en proposant un procédé et un dispositif de traitement des pièces creuses assemblées par un procédé de soudure par vibration linéaire, qui permettent de réduire voire d'éliminer toutes particules et/ou charges issues de la friction des pièces à souder, afin de respecter les normes de propreté en vigueur. L'invention vise également un dispositif simple à mettre en oeuvre, efficace, fiable, à coût réduit, pouvant équiper toute machine de soudure par vibration linéaire, et pouvant également s'adapter aisément à tout type de pièces creuses à souder sans contrainte de forme, ainsi qu'à tout type de matière thermoplastique chargée ou non en proposant un procédé modulaire et flexible.

Dans ce but, l'invention concerne un procédé de traitement du genre indiqué en préambule, caractérisé en ce que, au cours d'une première phase dudit procédé de traitement, l'on chauffe ledit flux de gaz mis en circulation à une température au moins égale à la température de fusion de ladite matière synthétique pour faire fondre au moins une partie desdites particules sur la paroi du volume intérieur de ladite pièce creuse, et pour élever simultanément et temporairement la température de ladite pièce creuse pour diminuer le temps de soudure.

Par conséquent, l'apport de chaleur dans la pièce creuse par le flux de gaz en circulation produit deux effets techniques contribuant à un résultat très satisfaisant. Le premier effet technique provoque la fusion des microparticules en cours de détachement et leur recollage sur la paroi intérieure de la pièce, et le second effet technique provoque un préchauffage de la pièce creuse qui se traduit par une réduction du temps de friction nécessaire à la soudure de la pièce et en conséquence une réduction de la quantité de particules arrachées à la pièce.

De préférence, lorsque le flux de gaz entre dans ladite pièce creuse, on le diffuse dans tout le volume intérieur de la pièce pour balayer toute sa surface intérieure et emporter toutes les particules et les charges détachées.

En fonction du type de pièce à souder, l'on peut ioniser ledit flux de gaz mis en circulation pour neutraliser lesdites particules et lesdites charges.

De manière avantageuse, l'on crée une aspiration dudit flux de gaz et desdites particules et desdites charges au moins en sortie de l'orifice de sortie de ladite pièce creuse pour maintenir un environnement de travail propre, et l'on filtre ledit flux de gaz pollué pour le débarrasser desdites particules et desdites charges.

Au cours d'une seconde phase dudit procédé de traitement, l'on peut mettre en circulation un flux de gaz froid dans le volume intérieur de ladite pièce creuse, entre au moins ledit orifice d'entrée et ledit orifice de sortie, pour abaisser la température ladite pièce creuse. Dans ce cas, l'on peut également ioniser ledit flux de gaz froid mis en circulation. Selon les besoins, l'on peut combiner ledit flux de gaz froid audit flux de gaz chaud pendant au moins une partie de ladite seconde phase dudit procédé de traitement.

Dans ce but, l'invention concerne aussi un dispositif de traitement du genre indiqué en préambule, caractérisé en ce qu'il comporte en outre une unité de chauffage pour élever la température dudit flux de gaz mis en circulation à une température au moins égale à la température de fusion de ladite matière synthétique pour faire fondre au moins une partie desdites particules sur la paroi du volume intérieur de ladite pièce creuse, et pour élever simultanément et temporairement la température de ladite pièce creuse pour diminuer le temps de soudure.

Selon les variantes de réalisation de l'invention, le dispositif de traitement peut comporter une unité d'ionisation pour charger électriquement ledit flux de gaz mis en circulation et neutraliser ainsi lesdites particules et lesdites charges.

Dans une forme de réalisation préférée, l'unité d'ionisation comporte au moins une barre d'ionisation disposée sur le trajet dudit flux de gaz en aval et/ou en amont de ladite première unité de ventilation.

Selon les variantes de réalisation, l'unité de chauffage peut être intégrée à ladite première unité de ventilation.

Le dispositif de traitement comporte avantageusement des moyens de raccordement agencés pour raccorder au moins ladite première unité de ventilation audit orifice d'entrée de la pièce creuse.

Ces moyens de raccordement peuvent comporter au moins une buse de soufflage destinée à être disposée au droit dudit orifice d'entrée de la pièce creuse par l'intermédiaire d'une pièce agencée pour découpler thermiquement ladite buse de soufflage de ladite pièce creuse.

Ladite buse de soufflage est avantageusement prolongée par au moins un diffuseur agencé pour répartir ledit flux de gaz dans tout le volume intérieur de ladite pièce creuse.

Dans la forme de réalisation préférée, le dispositif de traitement comporte au moins une deuxième unité de ventilation agencée pour aspirer ledit flux de gaz et lesdites particules et desdites charges au moins en sortie dudit orifice de sortie de la pièce creuse et maintenir l'environnement de travail propre.

Il peut comporter au moins une cloche d'aspiration raccordée en amont de ladite deuxième unité de ventilation et destinée à être disposée au droit de l'orifice de sortie de ladite pièce creuse, et au moins une unité de filtration raccordée en aval de ladite deuxième unité de ventilation et agencée pour débarrasser ledit flux de gaz pollué desdites particules et desdites charges.

Selon les variantes de réalisation, le dispositif de traitement peut également comporter au moins une troisième unité de ventilation pour mettre en circulation un flux de gaz froid dans le volume intérieur de ladite pièce creuse entre au moins ledit orifice d'entrée et ledit orifice de sortie pour abaisser la température ladite pièce creuse.

Dans ce cas, cette troisième unité de ventilation peut être avantageusement montée en parallèle à ladite première unité de ventilation par une vanne de circulation agencée pour contrôler ledit flux de gaz chaud et ledit flux de gaz froid circulant dans ladite pièce creuse.

Dans ce but également, l'invention concerne une machine de soudure, caractérisée en ce que le dispositif de traitement est agencé pour être raccordé à l'orifice d'entrée et à l'orifice de sortie de chaque pièce creuse par des moyens de raccordement et en ce que le dispositif de traitement est piloté par une unité de commande en fonction du cycle de ladite machine de soudure.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 est une vue schématique d'un dispositif de traitement d'une pièce creuse selon l'invention équipant une machine de soudure par vibration linéaire, et
- la figure 2 est une vue en coupe schématique montrant le raccordement du dispositif de traitement de la figure 1 à ladite pièce creuse à souder.

### Illustrations de l'invention et meilleure manière de la réaliser :

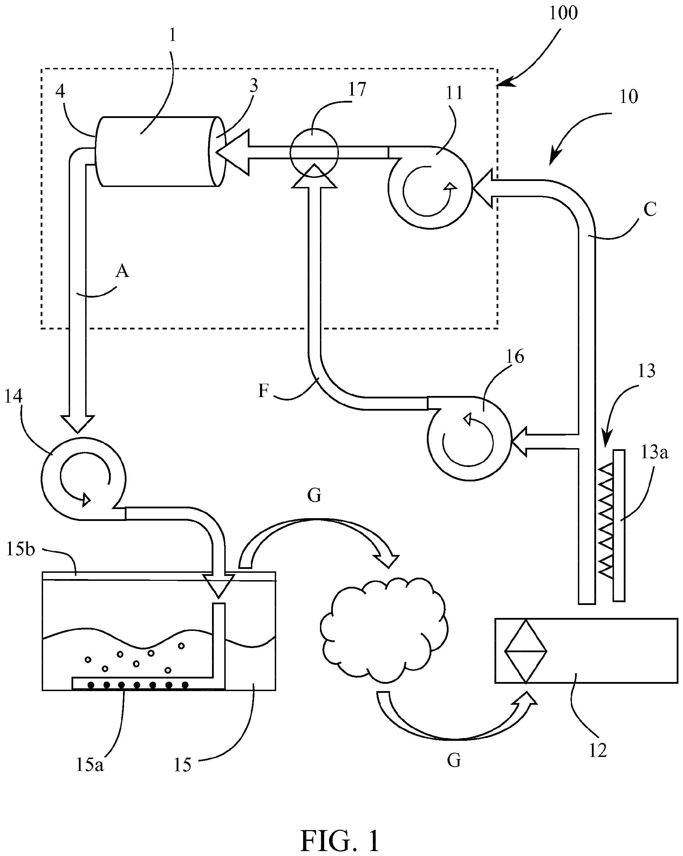

En référence aux figures, le dispositif de traitement 10 selon l'invention s'applique à une pièce creuse 1 assemblée par un procédé de soudure par vibration linéaire dans une machine de soudure 100, symbolisée sur la figure 1 par un cadre en trait interrompu. La machine de soudure 100 est bien connue et ne sera pas décrite. Le cadre en trait interrompu symbolisant la machine de soudure 100 peut être plus restreint et n'englober que la pièce creuse 1 à souder de sorte que le dispositif de traitement 10 est en totalité disposé à l'extérieur à la machine de soudure 100 et n'est relié à la machine que par ses conduits d'amenée et de sortie du flux de gaz. La pièce creuse 1 peut être constituée par tout organe technique formant un conduit, un collecteur, ou similaire, destiné à l'industrie automobile et aux biens de consommation, réalisé dans une matière synthétique renforcée ou non par des charges en fonction de son cahier des charges. A titre d'exemple non limitatif, on peut citer les matières thermoplastiques renforcées de fibres de verre conférant aux pièces réalisées une excellente résistance mécanique. Cette pièce creuse 1 définit par conséquent au moins un volume intérieur 2 et comporte au moins un orifice d'entrée 3 et au moins un orifice de sortie 4. A titre d'exemple, dans le cas d'un collecteur d'admission d'air, elle peut comporter un orifice d'entrée 3 et plusieurs orifices de sortie 4 en parallèle, ou plusieurs orifices d'entrée 3 en parallèle et un orifice de sortie 4. Dans la suite de la description et en fonction de la forme de la pièce creuse 1 à souder, les orifices d'entrée et de sortie de la pièce 1 par lesquels entre et sort le flux de gaz du dispositif de traitement 10 peuvent être inversés, à savoir que l'entrée du flux de gaz peut s'effectuer par le ou les orifice(s) de sortie de la pièce et la sortie du flux de gaz peut s'effectuer par le ou les orifice(s) d'entrée de la pièce.

Le dispositif de traitement 10 selon l'invention comporte au moins un circuit de gaz C, F agencé pour générer un flux de gaz G forcé destiné à traverser la pièce creuse 1 de part en part, de son orifice d'entrée 3 à son orifice de sortie 4, afin de circuler rapidement et efficacement dans l'ensemble de son volume intérieur 2 et d'extraire de la pièce creuse 1 les particules et/ou charges en suspension. Comme expliqué plus loin et grâce à un diffuseur 20, le flux de gaz G est réparti dans tout le volume intérieur 2 et incité à venir en contact avec l'ensemble de la paroi intérieure de la pièce creuse 1 afin d'emporter avec lui tout ou partie des particules et/ou des charges qui se sont détachées de la pièce creuse 1 lors de la phase de friction du procédé de soudure par vibration linéaire. Pour mémoire, cette phase de friction permet d'échauffer le cordon de soudure jusqu'à sa fusion pour souder la pièce creuse 1, comme expliqué précédemment dans l'état de l'art.

Dans l'exemple représenté à la figure 1, le gaz G utilisé est constitué de l'air environnant ou de l'air ambiant. Bien entendu, ce gaz G peut être différent en fonction des atmosphères dans lesquelles on souhaite souder la pièce creuse 1 et/ou en fonction des spécificités de la pièce creuse 1. Ce gaz G peut être de l'air mélangé à un autre gaz, de la vapeur, un gaz pur tel que de l'azote, ou similaire.

A cet effet, le dispositif de traitement 10 comporte une première unité de ventilation 11, qui prélève un gaz G à partir d'une source, l'injecte en force dans la pièce creuse 1 par son orifice d'entrée 3 et ressort en force de la pièce creuse 1 par son orifice de sortie 4, à la manière d'une soufflerie. Dans l'exemple illustré, la première unité de ventilation 11 prélève l'air ambiant à travers une unité de filtration amont 12 agencée pour injecter un air propre débarrassé des poussières ambiantes. L'unité de filtration amont 12 peut comporter des filtres secs à membranes ou similaires.

Le flux de gaz G forcé est avantageusement chauffé par une unité de chauffage qui est, dans l'exemple représenté, intégrée à la première unité de ventilation 11 formant une soufflerie de gaz chaud. Cette unité de chauffage peut bien entendu être distincte et disposée en amont ou en aval de l'unité de ventilation 11. On crée ainsi un circuit de gaz chaud C. Ce flux de gaz G chaud est de préférence élevé à une température au moins égale à la température de fusion de la matière synthétique de la pièce creuse 1. Il est injecté en force et réparti dans le volume intérieur 2 de la pièce creuse 1 pour faire fondre au moins une partie des particules de matière synthétique qui adhérent encore à la paroi intérieure de la pièce creuse 1 ou qui sont en train de se détacher ou qui sont en suspension dans le volume intérieur 2 de la pièce creuse 1, car elles se sont détachées lors de la phase de friction. L'augmentation de la température des particules induit la fusion de ces particules qui peuvent potentiellement adhérer à nouveau à la paroi intérieure de la pièce creuse 1, supprimant de fait une partie non négligeable des particules partiellement ou totalement détachées. A titre d'exemple, la température du flux de gaz G chaud peut être égale à environ 260-280°C si la matière synthétique est de la famille des polyamides. Ce flux de gaz G chaud, temporairement limité, n'a pas d'effet néfaste sur la pièce creuse 1 en elle-même, au contraire il améliore la soudure en favorisant la montée en température du cordon de soudure et en réduisant le temps de friction transitoire nécessaire pour aboutir à la soudure. En conséquence, seules les particules de matière synthétique en partie ou totalement détachées sont fusionnées par ce flux de gaz G chaud compte tenu de leur faible masse volumique. De plus, le fait de réduire le temps de friction nécessaire à la soudure de la pièce creuse 1 réduit automatiquement la quantité de particules et/ou de charges générée.

Dans l'exemple illustré, le flux de gaz G aspiré et filtré par la première unité de ventilation 11 est ionisé par une unité d'ionisation 13 située en amont de l'unité de ventilation 11 et de l'unité de chauffage. Cet agencement n'est toutefois pas limitatif. L'unité d'ionisation 13 pourrait être située en aval et/ou en amont de l'unité de ventilation 11. L'unité d'ionisation 13 est agencée pour charger le flux d'air en ions positifs et/ou négatifs qui vont se combiner avec les particules et/ou les charges qui se sont détachées de la matière synthétique formant la pièce creuse 1, elles-mêmes chargées, puis les neutraliser électriquement. L'ionisation du flux de gaz G permet ainsi de supprimer l'électricité statique desdites particules et/ou charges lors de la phase de friction. L'unité d'ionisation 13 peut comporter une ou plusieurs barres d'ionisation utilisant l'effet de pointe et générant de fait un effet Corona. Il en résulte que les particules et/ou charges n'adhèrent plus électro-statiquement à la paroi intérieure de la pièce creuse 1 et que celles-ci peuvent être entraînées hors de la pièce creuse 1 par le flux de gaz G en circulation.

Dans une variante non représentée du dispositif de traitement 10 et selon le type de pièces creuses 1 à traiter, l'unité d'ionisation 13 peut être supprimée.

Le dispositif de traitement 10 comporte, en outre, une deuxième unité de ventilation 14 disposée en aval de la pièce creuse 1 et agencée pour aspirer au moins le flux de gaz G et les particules et/ou les charges qu'il véhicule, à travers l'orifice de sortie 4 de la pièce creuse 1. Cette deuxième unité de ventilation 14 forme un circuit d'aspiration A. Comme expliqué ci-dessus, l'extraction ou l'évacuation des particules et/ou des charges à l'extérieur de la pièce creuse 1 s'effectue automatiquement par soufflage du flux de gaz G au moyen de la première unité de ventilation 11. Cette deuxième unité de ventilation 14 force l'aspiration du flux de gaz G d'une part et s'étend à la périphérie de la pièce creuse 1 d'autre part afin de maintenir un environnement de travail propre. Dans l'exemple représenté, le flux de gaz G aspiré est rejeté dans l'atmosphère environnante après avoir été filtré dans une unité de filtration aval 15. Le flux de gaz G est ainsi débarrassé des pollutions entrainées avec lui et notamment des particules et/ou des charges détachées de la pièce creuse 1 et restées en suspension dans son volume intérieur 2. L'unité de filtration aval 15 comporte dans l'exemple représenté un filtre à eau traversé par un tube perforé 15a à travers duquel le flux de gaz G pollué est injecté avant d'être rejeté dans l'atmosphère à travers à un filtre sec 15b ou similaire. Les particules et/ou charges en suspension restent piégées dans le filtre à eau. Le flux de gaz G rejeté dans l'atmosphère, à savoir l'air ambiant, est par conséquent refroidi et dépollué. Ce filtre à eau a l'avantage d'être simple, efficace et de refroidir simultanément ledit flux de gaz G. Néanmoins, tout autre moyen de filtration peut convenir tel qu'un filtre absolu, un filtre à membranes, un filtre à poches, ou similaire.

Dans l'exemple représenté, le dispositif de traitement 10 selon l'invention comporte également une troisième unité de ventilation 16, qui est raccordée en parallèle de la première unité de ventilation 11 pour former en amont de la pièce creuse 1 un circuit de gaz froid F. Le flux de gaz G aspiré, filtré et ionisé est dévié par une dérivation vers la troisième unité de ventilation 16, dont la sortie est raccordée à la sortie de la première unité de ventilation 11 par une vanne de circulation 17. Dans ce circuit de gaz froid F circule le flux de gaz G non chauffé, appelé par la suite flux de gaz G froid, qui peut être par exemple à température ambiante ou à une température inférieure à celle du flux de gaz G chaud. Cette vanne de circulation 17 peut être une vanne trois voies, une vanne à boisseau ou similaire, pilotée par une unité de commande (non représentée) en fonction du cycle de traitement de la pièce creuse 1, qui lui-même est dépendant du cycle du procédé de soudure. Une sonde de température (non représentée) peut être prévue en sortie du circuit de gaz chaud C pour contrôler la température du flux de gaz G et piloter la vanne de circulation 17 en conséquence. A titre d'exemple non limitatif, dans une première phase de traitement, la vanne de circulation 17 est positionnée pour n'autoriser que la circulation du flux de gaz G chaud pour générer simultanément le préchauffage de la pièce creuse 1 et la fusion d'une partie des particules détachées en partie ou en totalité comme expliqué plus haut, et évacuer le reste des particules et des charges détachées par le circuit d'aspiration A. Dans une seconde phase de traitement, la vanne de circulation 17 peut être positionnée pour autoriser simultanément la circulation du flux de gaz G froid permettant de réduire la température du flux de gaz G traversant la pièce creuse 1 et favoriser ainsi le refroidissement de la pièce creuse 1. La circulation du flux de gaz G chaud peut être interrompue dans une troisième phase de traitement pour ne maintenir que la circulation du flux de gaz G froid. Le circuit de gaz froid F permet également de gérer et maîtriser la température du flux de gaz G chaud injecté dans la première phase de traitement, et ainsi d'éviter une exposition continue du volume intérieur 2 de la pièce creuse 1 à une température élevée pouvant générer une détérioration de ladite pièce. Tout autre mode de gestion des différents flux de gaz G peut être envisagé.

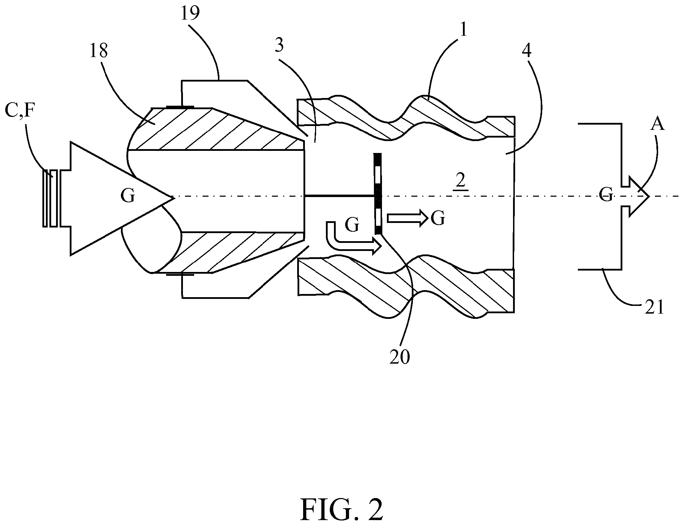

En référence plus particulièrement à la figure 2, le dispositif de traitement 10 selon l'invention est raccordé à la pièce creuse 1 à traiter de manière très simple. Le flux de gaz G entrant dans la pièce creuse 1 est injecté dans au moins un de ses orifices formant un orifice d'entrée 3 par une buse de soufflage 18 couplée au circuit de gaz C, F. Comme illustré à la figure 2, cette buse de soufflage 18 est entourée d'une pièce 19 ayant pour fonction de découpler thermiquement la buse de soufflage 18 par rapport à la pièce creuse 1. En effet, c'est la pièce 19 qui prend appui sur le périmètre intérieur de l'orifice d'entrée 3 de la pièce creuse 1 et permet ainsi, comme son nom l'indique, d'isoler thermiquement la buse de soufflage 18 de la pièce creuse 1 pour éviter tout risque de fusion au niveau dudit orifice d'entrée 3. Toutefois, ce mode de réalisation n'est pas limitatif et selon la position de la buse de soufflage 18 par rapport à l'orifice d'entrée 3, la pièce 19 n'est pas nécessaire. La buse de soufflage 18 est prolongée à l'intérieur de la pièce creuse 1 par un diffuseur 20 perforé ou non, un déflecteur ou tout autre organe agencé pour répartir rapidement et efficacement le flux de gaz G entrant dans l'ensemble du volume intérieur 2 de la pièce creuse 1 afin de lécher sa paroi intérieure et de piéger le plus de particules et charges en suspension. Le flux de gaz G généré à l'intérieur de la pièce creuse 1 peut être qualifié de flux tangent à la paroi intérieure de la pièce. Le flux de gaz G sortant de la pièce creuse 1 peut être aspiré par au moins un de ses orifices formant un orifice de sortie 4 par une cloche d'aspiration 21 disposée en regard dudit orifice de sortie 4 et couplée au circuit d'aspiration A. La cloche d'aspiration 21 peut être éloignée de l'orifice de sortie 4 pour que l'aspiration s'étende à la périphérie de la pièce creuse 1, afin de maintenir un environnement de travail propre. Les moyens de raccordement entre le dispositif de traitement 10 et la pièce creuse 1 à traiter ne sont donc pas étanches et peuvent être adaptés aisément et à moindre coût à tout type de pièce creuse 1. Bien entendu, si la pièce creuse 1 comporte plus de deux orifices 3, 4, il est possible de raccorder le circuit de gaz chaud C à plusieurs orifices d'entrée 3 et le circuit d'aspiration A à un seul orifice de sortie 4, afin de favoriser une répartition rapide et efficace du flux de gaz G dans tout le volume intérieur 2 de la pièce creuse 1.

### Possibilités d'application industrielle :

Le dispositif de traitement 10 selon l'invention peut être proposé à la vente en kit pour équiper les machines de soudure 100 par vibration linéaire déjà existantes. Il peut également être intégré à toute nouvelle machine de soudure 100 par vibration linéaire. Il est composé de différentes unités formant des modules permettant d'adapter très facilement la configuration et les fonctions du dispositif de traitement 10 à différentes applications. Il peut être envisagé de simplifier ce dispositif de traitement 10 en faisant circuler le flux de gaz G dans un circuit en boucle fermée permettant par exemple de supprimer la deuxième unité de ventilation 14. Cette solution impose toutefois de prévoir une ou plusieurs unités de filtration capables de dépolluer le flux de gaz G extrait de la pièce traitée avant de le réinjecter dans ladite pièce.

Comme on l'a vu plus haut, il s'adapte aisément à toutes les pièces creuses 1 pouvant être soudées par cette technique de soudure spécifique. Pour des raisons d'encombrement, la première unité de ventilation 11 peut être disposée à l'intérieur de la machine de soudure 100 comme illustré schématiquement à la figure 1. Dans ce cas, la première unité de ventilation 11 peut être montée sur des patins anti-vibrations ou similaires afin de ne pas être soumise aux vibrations de la machine de soudure 100. A l'inverse, pour des raisons de coût et de simplification, les différentes unités du dispositif de traitement 10 font partie d'un ensemble qui reste à l'extérieur de la machine de soudure 100 mais qui est raccordé à la machine par ses circuits de gaz C, F et A. Bien entendu, tout autre construction ou agencement du dispositif de traitement 10 et de la machine de soudure 100 peut être envisagé.

Le dispositif de traitement 10 est bien entendu piloté par une unité de commande (non représentée) en fonction du temps de cycle du procédé de soudure par vibration linéaire qui ne dure que quelques secondes. Plus particulièrement, le procédé de traitement mis en oeuvre dans le dispositif de traitement 10 selon l'invention prévoit qu'au cours d'une première phase, on fait circuler un flux de gaz G dans le volume intérieur 2 de la pièce creuse 1 entre au moins son orifice d'entrée 3 et son orifice de sortie 4, ce flux de gaz G étant au moins en partie tangent à la paroi intérieure de la pièce pour circuler dans l'ensemble son volume intérieur 2. Ce flux de gaz G est chauffé à une température au moins égale à la température de fusion de la matière synthétique pour faire fondre au moins une partie des particules sur la paroi du volume intérieur 2 de ladite pièce creuse 1 et pour préchauffer la pièce permettant de réduire le temps de soudure par friction. Ce flux de gaz G peut être en outre ionisé pour neutraliser les particules et/ou les charges en suspension dans le volume intérieur 2 de la pièce creuse 1, notamment lorsque la pièce est dans une matière thermoplastique renforcée par des charges telles que des fibres de verre.

Le procédé peut prévoir de créer simultanément une aspiration du flux de gaz G en sortie de l'orifice de sortie 4 de la pièce creuse 3 pour maintenir un environnement de travail propre en sortie de la machine de soudure 100 par aspiration des particules et/ou des charges, et de filtrer le flux de gaz G pollué pour le débarrasser de ces particules et/ou charges. Le procédé peut toutefois fonctionner sans aspiration.

Le procédé de traitement peut également prévoir qu'au cours d'une seconde phase, on fait circuler un flux de gaz G froid dans le volume intérieur 2 de la pièce creuse 1 entre au moins son orifice d'entrée 3 et son orifice de sortie 4, ce flux de gaz G froid pouvant être ou non combiné au flux de gaz G chaud pendant au moins une partie de cette seconde phase pour abaisser la température de la pièce creuse 1.

Il ressort clairement de cette description que l'invention permet d'atteindre les buts fixés, à savoir nettoyer efficacement le volume intérieur 2 fonctionnel des pièces creuses 1 obtenues par un procédé de soudure par vibration linéaire pour réduire au minimum, voire supprimer toute trace de pollution générée par le dépôt sur la paroi intérieure de la pièce creuse 1 de particules et/ou de charges détachées de la matière synthétique composant lesdites pièces creuses 1 lors de la phase de friction dudit procédé de soudure.

Le niveau de performance atteint par le dispositif de traitement 10 selon l'invention permet de se rapprocher voire de répondre aux normes de propreté drastiques qui ont été mises en place notamment par les constructeurs automobiles.

## Revendications

1. Procédé de traitement d'une pièce creuse (1) assemblée par un procédé de soudure par vibration linéaire, ladite pièce creuse (1) définissant au moins un volume intérieur (2), comportant au moins un orifice d'entrée (3) et au moins un orifice de sortie (4), et étant réalisée dans une matière synthétique renforcée ou non par des charges, procédé de traitement dans lequel, au moins pendant le procédé de soudure au cours duquel des particules se détachent de la matière synthétique composant ladite pièce creuse (1), accompagnées d'une fraction des charges si la matière synthétique en contient, en raison de l'abrasion induite par la vibration linéaire, l'on met en circulation un flux de gaz (G) dans le volume intérieur (2) de ladite pièce creuse (1), entre au moins ledit orifice d'entrée (3) et ledit orifice de sortie (4), pour extraire lesdites particules et ladite fraction des charges du volume intérieur (2) de ladite pièce creuse (1), **caractérisé en ce qu'**au cours d'une première phase dudit procédé de traitement, l'on chauffe ledit flux de gaz (G) mis en circulation à une température au moins égale à la température de fusion de ladite matière synthétique pour faire fondre au moins une partie desdites particules sur la paroi du volume intérieur (2) de ladite pièce creuse (1), et pour élever simultanément et temporairement la température ladite pièce creuse (1) pour diminuer le temps de soudure.

2. Procédé de traitement selon la revendication 1, **caractérisé en ce que** l'on répartit ledit flux de gaz (G) chaud dans tout le volume intérieur (2) de ladite pièce creuse (1) en le faisant passer par au moins un diffuseur (20).

3. Procédé de traitement selon la revendication 1, **caractérisé en ce que** l'on crée une aspiration dudit flux de gaz (G) et desdites particules et de ladite fraction des charges au moins en sortie de l'orifice de sortie (4) de ladite pièce creuse (1) pour maintenir un environnement de travail propre, et l'on filtre ledit flux de gaz (G) pollué pour le débarrasser desdites particules et de ladite fraction des charges.

4. Procédé de traitement selon l'une quelconque des revendications précédentes, **caractérisé en ce qu'**au cours d'une seconde phase dudit procédé de traitement, l'on met en circulation un flux de gaz (G) dit froid dans le volume intérieur (2) de ladite pièce creuse (1) entre au moins ledit orifice d'entrée (3) et ledit orifice de sortie (4) pour abaisser la température ladite pièce creuse (1).

5. Procédé de traitement selon l'une quelconque des revendications précédentes, **caractérisé en ce que** l'on ionise ledit flux de gaz (G) mis en circulation pour neutraliser lesdites particules et ladite fraction des charges.

6. Dispositif de traitement (10) d'une pièce creuse (1) assemblée par un procédé de soudure par vibration linéaire, ladite pièce creuse (1) définissant au moins un volume intérieur (2), comportant au moins un orifice d'entrée (3) et un orifice de sortie (4), et étant réalisée dans une matière synthétique renforcée ou non par des charges, ledit dispositif de traitement (10) comportant au moins une première unité de ventilation (11) pour mettre en circulation un flux de gaz (G) dans le volume intérieur (2) de ladite pièce creuse (1), entre au moins ledit orifice d'entrée (3) et ledit orifice de sortie (4), pour extraire lesdites particules du volume intérieur (2) de ladite pièce creuse (1), accompagnées d'une fraction des charges si la matière synthétique en contient, **caractérisé en ce qu'**il comporte en outre une unité de chauffage pour élever la température dudit flux de gaz (G) mis en circulation à une température au moins égale à la température de fusion de ladite matière synthétique pour faire fondre au moins une partie desdites particules sur la paroi du volume intérieur (2) de ladite pièce creuse (1), et pour élever simultanément et temporairement la température ladite pièce creuse (1) pour diminuer le temps de soudure.

7. Dispositif de traitement selon la revendication 6, **caractérisé en ce qu'**il comporte une unité d'ionisation (13) pour charger électriquement ledit flux de gaz (G) mis en circulation et neutraliser ainsi lesdites particules et ladite fraction des charges.

8. Dispositif de traitement selon la revendication 6, **caractérisé en ce qu'**il comporte des moyens de raccordement (18, 19) agencés pour raccorder au moins ladite première unité de ventilation (11) audit orifice d'entrée de la pièce creuse (1).

9. Dispositif de traitement selon la revendication 8, **caractérisé en ce que** lesdits moyens de raccordement comportent au moins une buse de soufflage (18) destinée à être disposée au droit de l'orifice d'entrée (3) de la pièce creuse (1) par l'intermédiaire d'une pièce (19) agencée pour découpler thermiquement ladite buse de soufflage (18) de ladite pièce creuse (1).

10. Dispositif de traitement selon la revendication 9, **caractérisé en ce que** ladite buse de soufflage (18) est prolongée par au moins un diffuseur (20) agencé pour répartir ledit flux de gaz (G) dans tout le volume intérieur (2) de ladite pièce creuse (1).

11. Dispositif de traitement selon l'une quelconque des revendications 6 à 10, **caractérisé en ce qu'**il comporte au moins une deuxième unité de ventilation (14) agencée pour aspirer ledit flux de gaz (G) et lesdites particules et ladite fraction des charges au moins en sortie dudit orifice de sortie (4) de la pièce creuse (1) et maintenir l'environnement de travail propre.

12. Dispositif de traitement selon la revendication 11, **caractérisé en ce qu'**il comporte au moins une cloche d'aspiration (21) raccordée en amont de ladite deuxième unité de ventilation (14) et destinée à être disposée au droit de l'orifice de sortie (4) de ladite pièce creuse (1), et au moins une unité de filtration (15) raccordée en aval de ladite deuxième unité de ventilation (14) et agencée pour débarrasser ledit flux de gaz (G) pollué desdites particules et de ladite fraction des charges.

13. Dispositif de traitement selon l'une quelconque des revendications 6 à 12, **caractérisé en ce qu'**il comporte au moins une troisième unité de ventilation (16) pour mettre en circulation un flux de gaz (G) dit froid dans le volume intérieur (2) de ladite pièce creuse (1) entre au moins ledit orifice d'entrée (3) et ledit orifice de sortie (4) pour abaisser la température ladite pièce creuse.

14. Dispositif de traitement selon la revendication 13, **caractérisé en ce que** ladite troisième unité de ventilation (16) est montée en parallèle à ladite première unité de ventilation (11) par une vanne de circulation (17) agencée pour contrôler ledit flux de gaz (G) chaud et ledit flux de gaz (G) froid circulant dans ladite pièce creuse (1).

15. Machine de soudure (100) par vibration linéaire pour assembler des pièces creuses (1), chaque pièce creuse (1) définissant au moins un volume intérieur (2), comportant au moins un orifice d'entrée (3) et au moins un orifice de sortie (4), et étant réalisée dans une matière synthétique renforcée ou non par des charges, **caractérisée en ce qu'**elle comporte au moins un dispositif de traitement (10) selon l'une quelconque des revendications 6 à 14, ledit dispositif de traitement (10) étant agencé pour être raccordé à l'orifice d'entrée (3) et à l'orifice de sortie (4) de chaque pièce creuse (1) par des moyens de raccordement (18, 19, 21), et **en ce que** ledit dispositif de traitement (10) est piloté par une unité de commande en fonction du cycle de ladite machine de soudure (100).

## Patentansprüche

1. Verfahren zur Behandlung eines Hohlteils (1), das mithilfe eines linearen Vibrationsschweißverfahrens zusammengefügt wird, wobei besagtes Hohlteil (1) zumindest ein Innenvolumen (2) mit zumindest einer Einlassöffnung (3) und zumindest einer Auslassöffnung (4) definiert und aus einem Kunststoff hergestellt ist, der mit Füllstoffen verstärkt sein kann oder nicht, Behandlungsverfahren in den man zumindest während des Schweißverfahrens, während dem sich auf Grund des durch die lineare Schwingung induzierten Abriebs Partikeln, begleitet von einer Fraktion der Füllstoffen, wenn der Kunststoff solche enthält, von dem besagtes Hohlteil (1) bildenden Kunststoff lösen, man einen Gasfluss (G) in dem Innenvolumen (2) von besagtem Hohlteil (1) zwischen zumindest besagter Einlassöffnung (3) und besagter Auslassöffnung (4) in Zirkulation bringt, um besagte Partikeln und besagte Füllstoff-Fraktion aus dem Innenvolumen (2) von besagtem Hohlteil (1) zu entfernen, **dadurch gekennzeichnet, dass** man während einer ersten Phase von besagtem Behandlungsverfahren besagten in Zirkulation gebrachten Gasfluss (G) auf eine Temperatur erwärmt, die zumindest gleich der Schmelztemperatur von besagtem Kunststoff ist, um zumindest ein Teil von besagten Partikeln auf der Wand des Innenvolumens (2) von besagtem Hohlteil (1) zu schmelzen, und um gleichzeitig und vorübergehend die Temperatur von besagtem Hohlteil (1) zu erhöhen, um die Schweißzeit zu verkürzen.

2. Behandlungsverfahren nach Anspruch 1, **dadurch gekennzeichnet, dass** man besagten warmen Gasfluss (G) in dem ganzen Innenvolumen (2) von besagtem Hohlteil (1) verteilt, indem man ihn durch zumindest einen Diffusor (20) leitet.

3. Behandlungsverfahren nach Anspruch 1, **dadurch gekennzeichnet, dass** man zumindest an der Auslassöffnung (4) von besagtem Hohlteil (1) eine Absaugung von besagtem Gasfluss (G) und von besagten Partikeln und besagter Füllstoff-Fraktion erzeugt, um eine saubere Arbeitsumgebung zu erhalten, und man besagten verschmutzten Gasfluss (G) filtert um ihn von besagten Partikeln und besagter Füllstoff-Fraktion zu befreien.

4. Behandlungsverfahren nach einem beliebigen der vorhergehenden Ansprüche, **dadurch gekennzeichnet, dass** man während einer zweiten Phase von besagtem Behandlungsverfahren einen sogenannten kalten Gasfluss (G) in dem Innenvolumen (2) von besagtem Hohlteil (1) zwischen zumindest besagter Einlassöffnung (3) und besagter Auslassöffnung (4) in Zirkulation bringt, um die Temperatur von besagtem Hohlteil (1) zu senken.

5. Behandlungsverfahren nach einem beliebigen der vorhergehenden Ansprüche, **dadurch gekennzeichnet, dass** man besagten in Zirkulation gebrachten Gasfluss (G) ionisiert, um besagte Partikeln und besagte Füllstoff-Fraktion zu neutralisieren.

6. Vorrichtung (10) zur Behandlung eines Hohlteils (1), das mithilfe eines linearen Vibrationsschweißverfahrens zusammengefügt wird, wobei besagtes Hohlteil (1) zumindest ein Innenvolumen (2) mit zumindest einer Einlassöffnung (3) und einer Auslassöffnung (4) definiert und aus einem Kunststoff hergestellt ist, der mit Füllstoffen verstärkt sein kann oder nicht, wobei besagte Behandlungsvorrichtung (10) zumindest ein erstes Gebläseaggregat (11) beträgt, um einen Gasfluss (G) in dem Innenvolumen (2) von besagtem Hohlteil (1) zwischen zumindest besagter Einlassöffnung (3) und besagter Auslassöffnung (4) in Zirkulation zu bringen, um besagte Partikeln, begleitet von einer Fraktion der Füllstoffe, wenn der Kunststoff solche enthält, aus dem Innenvolumen (2) von besagtem Hohlteil (1) zu entfernen, **dadurch gekennzeichnet, dass** sie zudem eine Erwärmungseinheit beträgt, um die Temperatur von besagtem in Zirkulation gebrachtem Gasfluss (G) auf eine Temperatur zu erwärmen, die zumindest gleich der Schmelztemperatur von besagtem Kunststoff ist, um zumindest ein Teil von besagten Partikeln auf der Wand des Innenvolumens (2) von besagtem Hohlteil (1) zu schmelzen, und um gleichzeitig und vorübergehend die Temperatur von besagten Hohlteil (1) zu erhöhen, um die Schweißzeit zu verkürzen.

7. Behandlungsvorrichtung nach Anspruch 6, **dadurch gekennzeichnet, dass** sie eine Ionisiereiheit (13) beträgt, um besagten in Zirkulation gebrachten Gasfluss (G) elektrisch zu laden und so besagte Partikeln und besagte Füllstoff-Fraktion zu neutralisieren.

8. Behandlungsvorrichtung nach Anspruch 6, **dadurch gekennzeichnet, dass** sie Anschlussmittel (18, 19) beträgt, die ausgelegt sind, um zumindest besagtes erstes Gebläseaggregat (11) an besagter Einlassöffnung von Hohlteil (1) anzuschließen.

9. Behandlungsvorrichtung nach Anspruch 8, **dadurch gekennzeichnet, dass** besagte Anschlussmittel zumindest eine Blasdüse (18) betragen, die dazu bestimmt ist, über ein Teil (19), das ausgelegt ist, um besagte Blasdüse (18) thermisch von besagtem Hohlteil (1) zu entkoppeln, vor Einlassöffnung (3) von Hohlteil (1) angebracht zu werden.

10. Behandlungsvorrichtung nach Anspruch 9, **dadurch gekennzeichnet, dass** besagte Blasdüse (18) durch zumindest einen Diffusor (20) verlängert wird, der ausgelegt ist, um besagten Gasfluss (G) in dem ganzen Innenvolumen (2) von besagtem Hohlteil (1) zu verteilen.

11. Behandlungsvorrichtung nach einem beliebigen der Ansprüche 6 bis 10, **dadurch gekennzeichnet, dass** sie zumindest ein zweites Gebläseaggregat (14) beträgt, das ausgelegt ist, um besagten Gasfluss (G) und besagte Partikeln und besagte Füllstoff-Fraktion zumindest am Auslass von besagter Auslassöffnung (4) von Hohlteil (1) abzusaugen und eine saubere Arbeitsumgebung zu erhalten.

12. Behandlungsvorrichtung nach Anspruch 11, **dadurch gekennzeichnet, dass** sie zumindest eine Saugglocke (21) beträgt, die stromaufwärts von besagtem zweiten Gebläseaggregat (14) angeschlossen ist und dazu bestimmt ist, vor der Auslassöffnung (4) von besagtem Hohlteil (1) angeordnet zu werden, und zumindest eine stromabwärts von besagtem zweiten Gebläseaggregat (14) angeordnete Filtereinheit (15), die ausgelegt ist, um besagten verschmutzten Gasfluss (G) von besagten Partikeln und besagter Füllstoff-Fraktion zu befreien.

13. Behandlungsvorrichtung nach einem beliebigen der Ansprüche 6 bis 12, **dadurch gekennzeichnet, dass** sie zumindest ein drittes Gebläseaggregat (16) beträgt um einen sogenannten kalten Gasfluss (G) in dem Innenvolumen (2) von besagtem Hohlteil (1) zwischen zumindest besagter Einlassöffnung (3) und besagter Auslassöffnung (4) in Zirkulation zu bringen, um die Temperatur von besagtem Hohlteil zu senken.

14. Behandlungsvorrichtung nach Anspruch 13, **dadurch gekennzeichnet, dass** besagtes drittes Gebläseaggregat (16) über ein Zirkulationsventil (17) parallel zu besagtem ersten Gebläseaggregat (11) geschaltet ist, das ausgelegt ist, um besagten warmen Gasfluss (G) und besagten kalten Gasfluss (G), die in besagtem Hohlteil (1) zirkulieren, zu kontrollieren.

15. Lineare Vibrationsschweißmaschine (100) um Hohlteile (1) zusammenzufügen, wobei jedes Hohlteil (1) zumindest ein Innenvolumen (2) mit zumindest einer Einlassöffnung (3) und zumindest einer Auslassöffnung (4) definiert und aus einem Kunststoff hergestellt ist, der mit Füllstoffen verstärkt sein kann oder nicht, **dadurch gekennzeichnet, dass** sie zumindest eine Behandlungsvorrichtung (10) nach einem beliebigen der Ansprüche 6 bis 14 beträgt, wobei besagte Behandlungsvorrichtung (10) ausgelegt ist, um über Anschlussmittel (18, 19, 21) an der Einlassöffnung (3) und an der Auslassöffnung (4) vom jedem Hohlteil (1) angeschlossen zu werden, und dadurch, dass besagte Behandlungsvorrichtung (10) von einer Steuereinheit in Abhängigkeit des Zyklus von besagter Schweißmaschine (100) angesteuert wird.

## Claims

1. Method for processing a hollow part (1) assembled by a linear vibration welding method, said hollow part (1) defining at least one internal volume (2) comprising at least one inlet opening (3) and at least one outlet opening (4) and being made out of a synthetic material reinforced or not by fillers, processing method wherein, at least during the welding process, during which particles detach themselves from the synthetic material forming said hollow part (1) together with a fraction of the fillers if the synthetic material contains some because of the abrasion induced by the linear vibration, one circulates a gas flow (G) in internal volume (2) of said hollow part (1) between at least said inlet opening (3) and said outlet opening (4), to extract said particles and said fillers fraction from internal volume (2) of said hollow part (1), **characterized in that** during a first phase of said processing method one heats said circulated gas flow (G) to a temperature at least equal to the melting temperature of said synthetic material in order to melt at least a part of said particles on the wall of internal volume (2) of said hollow part (1) and to raise simultaneously and temporarily the temperature of said hollow part (1) to shorten the welding time.

2. Processing method according to claim 1, **characterized in that** one distributes said hot gas flow (G) in the whole internal volume (2) of said hollow part (1) by making it pass through at least one diffuser (20).

3. Processing method according to claim 1, **characterized in that** one creates an extraction of said gas flow (G) and of said particles and of said fillers fraction at least at the outlet of outlet opening (4) of said hollow part (1) to maintain a clean working environment, and one filters said polluted gas flow (G) to free it from said particles and said fillers fraction.

4. Processing method according to any of the previous claims, **characterized in that**, during a second phase of said processing method, one circulates a so-called cold gas flow (G) in internal volume (2) of said hollow part (1) between at least said inlet opening (3) and said outlet opening (4) to lower the temperature of said hollow part (1).

5. Processing method according to any of the previous claims, **characterized in that** one ionizes said circulated gas flow (G) to neutralize said particles and said fillers fraction.

6. Device (10) for processing a hollow part (1) assembled by a linear vibration welding method, said hollow part (1) defining at least one internal volume (2) comprising at least one inlet opening (3) and at least one outlet opening (4) and being made out of a synthetic material reinforced or not by fillers, said processing device (10) comprising at least one first ventilation unit (11) to circulate a gas flow (G) in internal volume (2) of said hollow part (1) between at least said inlet opening (3) and said outlet opening (4), to extract said particles from internal volume (2) of said hollow part (1), together with a fraction of the fillers if the synthetic material contains some, **characterized in that** it moreover comprises a heating unit to raise the temperature of said circulated gas flow (G) to a temperature at least equal to the melting temperature of said synthetic material in order to melt at least a part of said particles on the wall of internal volume (2) of said hollow part (1) and to raise simultaneously and temporarily the temperature of said hollow part (1) to shorten the welding time.

7. Processing device according to claim 6, **characterized in that** it comprises an ionization unit (13) to load electrically said circulated gas flow (G) and thus neutralize said particles and said fillers fraction.

8. Processing device according to claim 6, **characterized in that** it comprises connecting means (18, 19) arranged to connect at least said first ventilation unit (11) to said inlet opening of hollow part (1).

9. Processing device according to claim 8, **characterized in that** said connecting means comprise at least one nozzle (18) intended for being located in front of inlet opening (3) of hollow part (1) through a part (19) arranged to decouple thermally said nozzle (18) from said hollow part (1).

10. Processing device according to claim 9, **characterized in that** said nozzle (18) is prolonged by at least one diffuser (20) arranged to distribute said gas flow (G) in the whole internal volume (2) of said hollow part (1).

11. Processing device according to any of claims 6 to 10, **characterized in that** it comprises at least one second ventilation unit (14) arranged to draw in said gas flow (G) and said particles and said fillers fraction at least at the outlet of said outlet opening (4) of hollow part (1) and maintain a clean working environment.

12. Processing device according to claim 11, **characterized in that** it comprises at least one suction bell (21) connected upstream of said second ventilation unit (14) and intended to be located in front of outlet opening (4) of said hollow part (1), and at least one filtering unit (15) connected downstream of said second ventilation unit (14) and arranged to clear said gas flow (G) of said particles and said fillers fraction.

13. Processing device according to any of claims 6 to 12, **characterized in that** it comprises at least one third ventilation unit (16) to circulate a so-called cold gas flow (G) in internal volume (2) of said hollow part (1) between at least said inlet opening (3) and said outlet opening (4) to lower the temperature of said hollow part.

14. Processing device according to claim 13, **characterized in that** said third ventilation unit (16) is mounted in parallel to said first ventilation unit (11) by means of a circulation valve (17) arranged to control said hot gas flow (G) and said cold gas flow (G) that circulate in said hollow part (1).

15. Linear vibration welding machine (100) for assembling hollow parts (1), each hollow part (1) defining at least one internal volume (2) comprising at least one inlet opening (3) and at least one outlet opening (4) and being made out of a synthetic material reinforced or not by fillers, **characterized in that** it comprises at least one processing device (10) according to any of claims 6 to 14, said processing device (10) being arranged to be connected to inlet opening (3) and to outlet opening (4) of every hollow part (1) through connecting means (18, 19, 21) and **in that** said processing device (10) is controlled by a control unit according to the cycle of said welding machine (100).
